(19) Europäisches Patentamt
European Patent Office
Office européen des brevets

(11) Veröffentlichungsnummer: **0 501 248 A1**

# (12) EUROPÄISCHE PATENTANMELDUNG

(21) Anmeldenummer: **92102447.7**

(51) Int. Cl.[5]: **C08K 5/527**, C08L 23/02

(22) Anmeldetag: **14.02.92**

(30) Priorität: **27.02.91 DE 4106126**

(43) Veröffentlichungstag der Anmeldung:
**02.09.92 Patentblatt 92/36**

(84) Benannte Vertragsstaaten:
**DE FR GB IT**

(71) Anmelder: **BAYER AG**

**W-5090 Leverkusen 1 Bayerwerk(DE)**

(72) Erfinder: **Schrage, Heinrich, Dr.**
**Doerperhofstrasse 31**
**W-4150 Krefeld(DE)**
Erfinder: **Buysch, Hans-Josef, Dr.**
**Brandenburger Strasse 28**
**W-4150 Krefeld(DE)**
Erfinder: **Janke, Nikolaus, Dr.**
**Moltkestrasse 11**
**W-4047 Dormagen(DE)**
Erfinder: **Weidenhaupt, Hermann-Josef, Dr.**
**Pfarrer-Forst-Strasse 3**
**W-5164 Nörvenich(DE)**
Erfinder: **Engels, Hans-Wilhelm, Dr.**
**Dickeicher Feld 12**
**W-5014 Kerpen 3(DE)**

## (54) Stabilisierte Polyolefine.

(57) Die durch spezielle Phosphorigsäureester von Bisphenolen stabilisierten Polyolefine zeichnen sich durch eine gute Verarbeitungsstabilität sowie eine verbesserte Langzeitstabilität aus.

EP 0 501 248 A1

Die vorliegende Erfindung betrifft Polyolefine, die mit speziellen Phosphorigsäureestern stabilisiert sind.

Organische Polymere, wie beispielsweise Polyolefine, sind dem thermischen und oxidativen Abbau sowie der Zersetzung durch Licht unterworfen. Es ist eine große Anzahl Stabilisatoren für die verschiedenen Polymere bekannt. Ihre Wirksamkeit ist abhängig sowohl von den Ursachen der Zersetzung als auch von der Art des stabilisierten Polymeren. So sind einige Verbindungen, die wirksame Langzeit-Antioxidantien sind, relativ unwirksam in Verarbeitungsprozessen, z.B. Extrusionen, bei denen die thermische Belastung der Polymere für kurze Zeit relativ hoch ist.

In der Regel wird für die ausreichende Stabilisierung eines Polymers die Kombination verschiedener Stabilisatoren verwendet, weil die Anwesenheit nur eines Stabilisators keinen ausreichenden Schutz vor den verschiedenen Möglichkeiten der Schädigung des Polymers gewährt. So beschreibt beispielsweise die DE-OS 28 56 801 alkylierte 2,2'-Bisphenylen-phosphite mit deren Hilfe Polymere bei der Verarbeitung stabilisiert werden können. Nachteilig bei der Stabilisierung mit diesen Phosphiten ist jedoch die geringe langzeitstabilisierende Wirkung dieser Verbindungen (siehe Vergleichsbeispiel), die den Zusatz weiterer Stabilisatoren erfordert.

In der europäischen Patentanmeldung 395 030 werden bestimmte organischen Phosphite beschrieben, die geeignet sind, Polyolefine, die noch Reste eines Ziegler-Katalysators enthalten, zu stabilisieren. Jedoch auch mit diesen Phosphiten wird nur eine unzureichende Langzeitstabilität der Polyolefine erzielt.

Überraschend wurde nun gefunden, daß durch die Verwendung spezieller Phosphorigsäureester von Bisphenolen einerseits eine gute Verarbeitungsstabilität und andererseits eine sehr gute gegenüber den Bisphenylen-Phosphiten verbesserte Langzeit-Stabilität von Polyolefinen erhalten wird. Dadurch bedingt sind die erfindungsgemäß stabilisierten Polyolefine auch in Abwesenheit von Co-Stabilisatoren, wie diphenolischen Antioxidantien, sehr gut haltbar.

Gegenstand der vorliegenden Erfindung sind daher Verarbeitungs- und Langzeit-stabilisierte Polyolefine, enthaltend 0,01 bis 5 Gew.-% Phosphorigsäureester der allgemeinen Formel

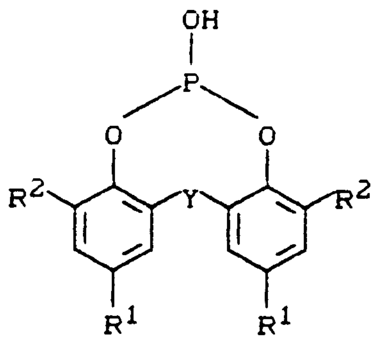

,

worin

- $R^1$ für Wasserstoff, einen $C_1$-$C_{18}$-Alkyl-, einen $C_5$-$C_7$-Cycloalkyl-, einen $C_7$-$C_{10}$-Aralkyl- oder einen $C_6$-$C_{10}$-Arylrest steht,
- $R^2$ einen $C_1$-$C_8$-Alkyl-, $C_5$-$C_7$-Cycloalkyl-, Benzyl-, $\alpha$-Methylbenzyl- oder einen $\alpha,\alpha$-Dimethylbenzylrest darstellt und
- Y für Schwefel oder für $>CHR^3$ steht mit $R^3$ für Wasserstoff, einen $C_1$-$C_4$-Alkyl- oder einen $C_5$-$C_7$-Cycloalkylrest.

In der obengenannten Formel steht $R^1$ bevorzugt für einen geradkettigen oder verzweigten Alkylrest mit 1 bis 8 Kohlenstoffatomen, beispielsweise für Methyl, Ethyl, iso-Propyl, tert.-Butyl, besonders bevorzugt für Methyl und tert.-Butyl.

$R^2$ steht vorzugsweise für verzweigtes Alkyl mit 3 bis 8 Kohlenstoffatomen, beispielsweise für iso-Propyl, iso-Butyl, tert.-Butyl, sowie für Cyclohexyl, Benzyl, $\alpha$-Methylbenzyl, $\alpha,\alpha$-Dimethylbenzyl oder $\alpha$-Methylcyclohexyl. Besonders bevorzugt sind Cyclohexyl, iso-Propyl, Benzyl, $\alpha$-Methylbenzyl oder $\alpha,\alpha$-Dimethylbenzyl.

Y steht bevorzugt für Schwefel oder die Methylengruppe, besonders bevorzugt für die Methylengruppe.

Die erfindungsgemäß eingesetzten Phosphorigsäureester sind bekannt und werden nach bekannten Methoden hergestellt, Verwiesen wird in diesem Zusammenhang auf die europäische Patentanmeldung 9115.

Vorzugsweise werden die erfindungsgemäßen Phosphorigsäureester (Stabilisatoren) in Mengen von 0,05 bis 2 Gew.-%, besonders bevorzugt von 0,1 bis 1 Gew.-%, bezogen auf die zu stabilisierenden Polyolefine, eingesetzt.

Als Polyolefine, die mit den erfindungsgemäßen Phosphorigsäureestern stabilisiert werden können, werden vorzugsweise genannt: Polyethylen, Polypropylen, Polybuten-1, Polypenten-1, Polymethyl-penten-1, Polyisopren, Polybutadien sowie Mischungen der genannten Polyolefine. Außerdem seien genannt copolymere Polyolefine, wie Propylen-buten-1-Copolymere, Propylen-iso-butylen-Copolymere, Ethylen-buten-1-Copolymer, Ethylen-propylen-Copolymere sowie tert.-Polymere von Ethylen und Propylen mit einem Dien, wie Hexadien, Cyclopentadien oder Ethylennorbonen.

Selbstverständlich können die erfindungsgemäß stabilisierten Polyolefine noch weitere, übliche Additiven enthalten wie UV-Absorber und Lichtschutzmittel, Metalldesaktivatoren, andere Phosphite, peroxidzerstörende Verbindungen, Nukleierungsmittel, Weichmacher, Gleitmittel, Emulgatoren, Füllstoffe, Ruß, Kaolin, Talk, Glasfasern, Pigmente, optische Aufheller, Flammschutzmittel, Antistatica oder weitere Antioxidantien.

Darüber hinaus kann man den Polyolefinen noch Thioverbindungen zumischen, beispielsweise solche, die einen deutlichen synergistischen Effekt bewirken. Genannt seien Dilaurylthiodipropionat und Distearylthiodipropionat. Diese Verbindungen werden in einer Konzentration von 0,01 bis 5 Gew.-%, bevorzugt 0,05 bis 2 Gew.-%, besonders bevorzugt 0,1 bis 1 Gew.-%, bezogen auf die zu stabilisierenden Polyolefine eingesetzt.

Die erfindungsgemäß einzusetzenden Phosphorigsäureester können mühelos mit den üblichen Methoden in die Polyolefine eingearbeitet werden, und zwar in jeder beliebigen Phase während der Herstellung oder der Verarbeitung der Polyolefine.

Die mit den erfindungsgemäßen Phosphorigsäureestern stabilisierten Polyolefine zeichnen sich durch geringe Verfärbung bei der Verarbeitung bei hohen Temperaturen aus. Die Verfärbung ist auch dann noch gering, wenn das Polyolefin mehrmals extrudiert wird. Polyolefine, die diese Eigenschaft besonders deutlich zeigen, sind Polypropylen, Polyethylen, Polybutylen-1 sowie die verschiedenen Ethylen-Propylen-Copolymere.

Beispiele

Beispiel 1

Phosphorigsäureester des Bis-(2-hydroxy-3-cyclohexyl-5-methyl-phenyl)-methans:

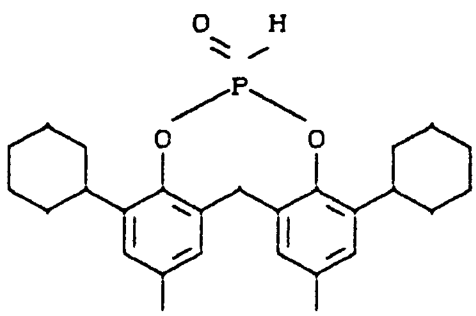

Ein Gemisch aus 392 g (1 Mol) Bis-(2-hydroxy-3-cyclohexyl-5-methyl-phenyl)-methan, 310 g (1 Mol) Triphenylphosphit und 18 g (1 Mol) Wasser wird unter Normaldruck und Stickstoff bis 180 °C erhitzt. Man läßt abkühlen auf 100 °C und erhitzt dann bei 3333 Pa in 2.5 h von 100 auf 200 °C. Dabei gehen 275 g Phenol über. Als Rückstand verbleibt ein fast farbloses, langsam kristallisierendes Produkt (445 g).
Schmp. 180-1 °C (aus Toluol/Hexan).

Beispiel 2

Phosphorigsäureester des Bis-(2-hydroxy-3-styryl-5-methyl-phenyl)-methans:

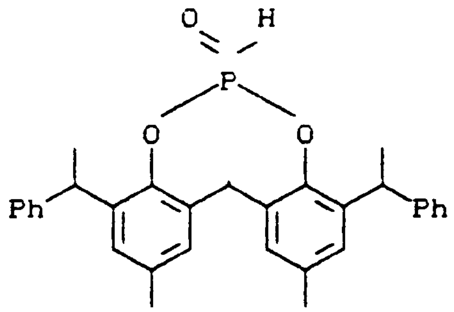

Ein Gemisch aus 218 g (0,5 Mol) Bis-(2-hydroxy-3-styryl-5-methyl-phenyl)-methan und 68,7 g (0,5 Mol) Phosphortrichlorid werden in Toluol 3 h auf 60 bis 70 ° C erhitzt. Anschließend werden 9 g (0,5 Mol) Wasser zugegeben und weitere 3 h bei 90 ° C gerührt. Nach dem Abdestillieren des Lösungsmittels verbleiben 239 g Rückstand eines fast farblosen Harzes.
Schmp. 214 ° C (aus Toluol/Hexan).

Prüfung der Verarbeitungsstabilität von Polypropylen:
Unstabilisiertes Polypropylen (z.B. Hostalen PPK 0160 F) wird mit 0,15 % des in Beispiel 1 beschriebenen Stabilisators in einem Schnellmischer homogenisiert, mit einem Einwellenextruder bei 250 ° C strangextrudiert und granuliert. Das Granulat wird weiteren vier Extrusionspassagen unterworfen. Nach jeder Extrusionspassage wird eine Granulatprobe entnommen und deren Schmelzindex MVI-230/2.16 (ccm/10 min) nach DIN 53 735 gemessen. Dazu wird eine Probe des Granulats auf 230 ° C erhitzt und mit einer Kraft von 2,16 Kilopond durch eine Düse mit einer Öffnung von 2,095 mm gedrückt. Gemessen wird das Volumen der Probe, das in 10 min durch die Düse gepreßt wird.

MVI-230 ° C/2.16 [ccm/10 min]

| | Anzahl der Extrusionen | | | |
|---|---|---|---|---|
| | 1 | 2 | 3 | 4 |
| Polypropylen unstab. | 22.3 | 121 | - | - |
| Irgaphos 168 (Ciba) | 11.5 | 95.7 | - | - |
| Substanz aus Beispiel 1 | 1.2 | 4.8 | 9.9 | 16.1 |

Wie man erkennt, besitzen die erfindungsgemäßen Substanzen eine ausgezeichnete verarbeitungsstabilisierende Wirkung, erkennbar durch die vergleichsweise geringe Erniedrigung der Viskosität.

Ofenalterung von Polypropylenplättchen, enthaltend Phosphorigsäureester:
Unstabilisiertes Polypropylenpulver (z.B. Hostalen PPK 0160 F) wird sorgfältig mit 0,2 Gew.-% des jeweiligen Stabilisators gemischt. Es werden auch Proben bereitet, die 0,2 Gew.-% desselben Stabilisators und 0,1 Gew.-% Distearyl-thiodipropionat enthalten. Das gemischte Material wird dann in einer Zweiwalzen-Mühle 10 min bei RT gemahlen. Danach wird das stabilisierte Polypropylen-Pulver in einer hydraulischen Presse 10 min bei 180 ° C bei einem Druck von 200 bar gepreßt. Die erhaltenen Platten von 0,1 mm Dicke werden auf ihre Widerstandsfähigkeit gegen beschleunigtes Altern in einem Ofen bei 150 ° C getestet. Sobald die Plättchen die ersten Anzeichen von Brüchigkeit, wie z.B. braune Ecken zeigen, wurden sie als zersetzt angesehen.

| | Stunden bis Zersetzung |
|---|---|
| unstabilisiert | 6 |
| Stabilisator aus Beispiel 1 | 240 |
| Stabilisator aus Beispiel 1 + 0,1 % Distearylthiodipropionat | 330 |
| Stabilisator aus Beispiel 2 | 280 |
| Stabilisator aus Beispiel 2 + 0,1 % Distearylthiodipropionat | 350 |

Vergleichsbeispiel

| | |
|---|---|
| 6,6'-Di-tert.-butyl-4,4'-dimethyl-2,2'-biphenylen)-phosphit (Substanz aus Beispiel 3, bzw. Anspruch 4 der DOS 2 856 801 | 40 |

## Patentansprüche

1. Polyolefine, enthaltend 0,01 bis 5 Gew.-% Phosphorigsäureester der allgemeinen Formel

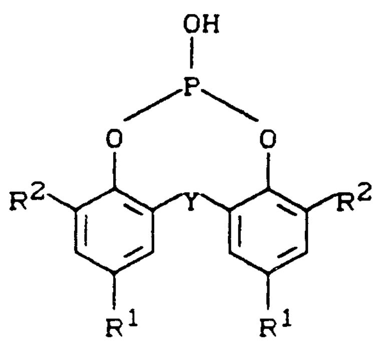

,

worin

$R^1$ für Wasserstoff, einen $C_1$-$C_{18}$-Alkyl-, einen $C_5$-$C_7$-Cycloalkyl-, einen $C_7$-$C_{10}$-Aralkyl- oder einen $C_6$-$C_{10}$-Arylrest steht,

$R^2$ einen $C_1$-$C_8$-Alkyl-, $C_5$-$C_7$-Cycloalkyl-, Benzyl-, $\alpha$-Methylbenzyl- oder einen $\alpha,\alpha$-Dimethylbenzylrest darstellt und

Y für Schwefel oder für $\rangle CHR^3$ steht mit $R^3$ für Wasserstoff, einen $C_1$-$C_4$-Alkyl- oder einen $C_5$-$C_7$-Cycloalkylrest.

2. Polyolefine nach Anspruch 1, dadurch gekennzeichnet, daß sie die Phosphorigsäureester in Mengen von 0,05 bis 2 Gew.-% enthalten.

3. Polyolefine nach Anspruch 1 und 2, enthaltend Phosphorigsäureester der allgemeinen Formel des Anspruchs 1 mit $R^1$ für Methyl, Ethyl, iso-Propyl oder tert.-Butyl, $R^2$ für iso-Propyl, iso-Butyl, tert.-Butyl, Cyclohexyl, Benzyl, $\alpha$-Methylbenzyl oder $\alpha$-Methylcyclohexyl und Y für Schwefel oder die Methylengruppe.

Europäisches Patentamt

# EUROPÄISCHER RECHERCHENBERICHT

Nummer der Anmeldung

EP 92 10 2447

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| X | US-A-3 297 631 (D.E.BROWN ET AL)<br>* Spalte 1, Zeile 23 - Spalte 2, Zeile 6 *<br>* Spalte 3, Zeile 52 - Zeile 60; Abbildung XXI *<br>* Spalte 9, Zeile 65 - Zeile 70 *<br>* Beispiel 9; Tabelle VI *<br>--- | 1-3 | C08K5/527<br>C08L23/02 |
| X | CHEMICAL ABSTRACTS, vol. 82, no. 5, 1975, Columbus, Ohio, US;<br>abstract no. 58628Y,<br>N.A.MUKMENEVA ET AL: 'inhibiting action of some dialkyl(aryl)phosphorous acids'<br>Seite 41 ;Spalte 1 ;<br>* Zusammenfassung *<br>--- | 1,3 | |
| X | CHEMICAL ABSTRACTS, vol. 82, 1975, Columbus, Ohio, US;<br>abstract no. 140926Z,<br>N.A.MUKMENEVA ET AL: 'color stabilizing action of phosphites during the bisphenol-inhibited thermal oxidation of high density polyethylene'<br>Seite 31 ;Spalte 2 ;<br>verbindung xxii<br>* Zusammenfassung *<br>--- | 1,3 | RECHERCHIERTE SACHGEBIETE (Int. Cl.5 )<br>C08K<br>C08L |
| X | WO-A-9 003 976 (EASTMAN KODAK)<br>* Seite 5, Zeile 37 - Seite 6, Zeile 6 *<br>* Seite 13, Zeile 35 - Seite 14, Zeile 19 *<br>----- | 1-3 | |

Der vorliegende Recherchenbericht wurde für alle Patentansprüche erstellt

| Recherchenort | Abschlußdatum der Recherche | Prüfer |
|---|---|---|
| DEN HAAG | 10 JUNI 1992 | SCHMIDT H.R. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)